# EUROPEAN PATENT APPLICATION

(11) **EP 1 617 653 A2**
(43) Date of publication of application: **18.01.2006**
(21) Application number: 05254445.9
(22) Date of filing: 15.07.2005
(51) Int. Cl.: H04N 5/232

(54) **Lens apparatus and image synthesis system**

(30) Priority: 16.07.2004 JP 2004210111
(71) Applicant: CANON KABUSHIKI KAISHA, Ohta-ku, Tokyo (JP)
(72) Inventor: Tanaka, Isao, c/o Canon Kabushiki Kaisha, Ohta-ku, Tokyo (JP)
(74) Representative: Legg, Cyrus James Grahame

(57) **Abstract**

A lens apparatus that can communicate with a virtual system without reconfiguring the lens apparatus, where the lens apparatus can include a movable optical member, a position detection unit, an arithmetic processing unit, and a communication unit configured to transmit the optical information signal to the virtual system.

## Description

### BACKGROUND OF THE INVENTION

### Field of the Invention

The present invention relates to a lens apparatus, and more particularly, but not exclusively, to a lens apparatus configured to be used with at least one of an image synthesis apparatus, an image capture apparatus, and an image synthesis system.

### Description of the Related Art

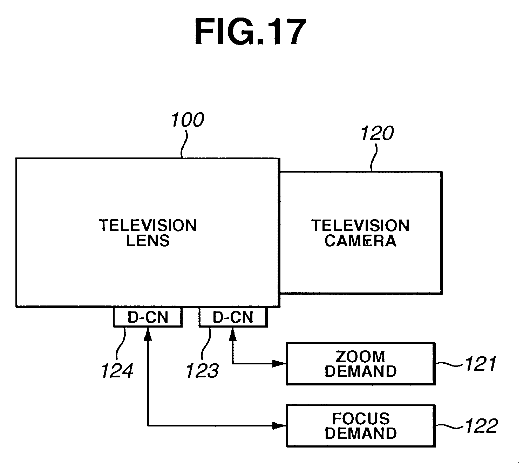

A conventional television lens allows a user to create a desired video scene by electrically or manually operating a movable optical member (e.g., a zoom lens, a focus lens, an iris mechanism, or an extender), (attached to a television camera) to produce an optical change. Fig. 17 illustrates a block diagram schematically showing an example of a conventional television lens system. In Fig. 17, the television lens system includes a television lens 100 and a television camera 120. The television lens 100 is mounted on the television camera 120. The television lens system further includes a zoom demand 121, a focus demand 122, and demand connectors 123 and 124. The zoom demand 121 is operable by the user to perform zooming of the television lens 100. The focus demand 122 is also operable by the user to perform focusing of television lens 100. The demand connectors 123 and 124 are adapted to connect the zoom demand 121 and the focus demand 122 to the television lens 100, respectively. In such a television lens system, a potentiometer or a rotary encoder is coupled to a movable optical member (e.g., a zoom lens or a focus lens), and is used as a position detection unit for detecting the position of the optical member to perform servo driving or to provide position indication.

Television lenses are classified into large-sized high-performance lenses suitable for use in a studio and portable handy lenses suitable for outdoor use or carryable on the user's shoulder. In the large-sized lens, a digital encoder for outputting a two-phase digital signal is generally used as a position detection unit, while in the handy lens, a potentiometer for outputting an analog voltage is generally used (see U.S. Patent Application Publication No. US 2002/0122113 A1, Japanese Laid-Open Patent Application No. 2004-056742, Japanese Laid-Open Patent Application No. 2000-270261, U.S. Patent Application Publication No. US 2001/0028463 A1, Japanese Laid-Open Patent Application No. 2000-270203, U.S. Patent No. 6,034,740, Japanese Laid-Open Patent Application No. 2004-134950, European Patent Application Publication No. EP 0989747 A2, and Japanese Laid-Open Patent Application No. 10-303838).

In addition, various virtual systems for merging a real video image with a compute-generated image associated with the real video image have been actively developed. In these virtual systems (e.g., image synthesis apparatus), the above-described large-sized television lens or handy television lens is used.

In an image synthesis system using such a virtual system, a position detection signal indicating the position of a movable optical member of the television lens (zoom position, focus position) is transmitted to the virtual system. This enables a computer incorporated in the virtual system to create a computer-generated image matched with the size and focus position of a real video image. Accordingly, even when the zoom lens, the focus lens, or other optical elements are operated in real time, a synthesized video image can be created without producing an unconventional view to the user.

Conventionally, there has been no dedicated or standardized method of connecting the television lens to the virtual system. In a conventional image synthesis system, existing connection components of the television lens are temporarily used, or the television lens is so modified as to conform to the virtual system. As to connection between the virtual system and the television lens, there are three connection methods as described below, i.e., a connection method using a digital pulse train, a connection method using an analog voltage signal, and a connection method using data communication.

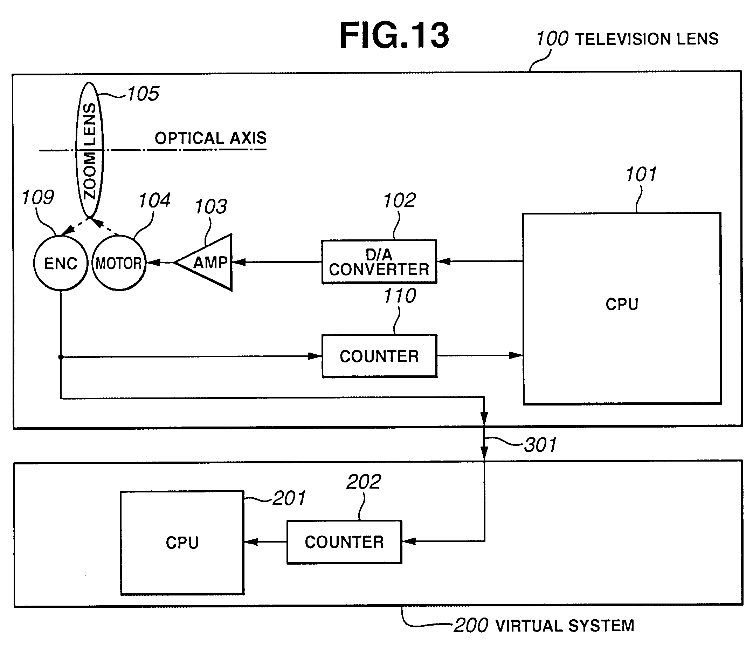

Fig. 13 illustrates a block diagram schematically showing a conventional image synthesis system in which a virtual system 200 is connected to a television lens 100 incorporating a digital encoder (ENC) 109 as a position detection unit. The television lens 100 includes a CPU (central processing unit) 101, a D/A (digital-to-analog) converter 102, a power amplifier 103, a motor 104, a zoom lens 105, a digital encoder 109, and a counter 110. The CPU 101 controls each part of the television lens 100. The D/A converter 102 receives a command value from the CPU 101 for performing zooming. The power amplifier 103 amplifies the command value from the D/A converter 102. The motor 104 is driven based on an amplified signal from the power amplifier 103 and then the zoom lens 105 is driven by the motor 104 to perform zooming. The digital encoder 109 functions as a zoom position detection unit for detecting the zoom position of the zoom lens 105. The counter 110 counts a two-phase pulse signal outputted from the digital encoder 109 to calculate the zoom position. While, in Fig. 13, only the zoom lens 105 is shown as a movable optical member in the television lens 100, a focus lens, an iris mechanism, and an extender are also configured in a similar manner as the zoom lens 105.

When a command device (zoom demand) 121 (Fig. 17), connected to the television lens 100, is operated by the user to transmit a command to the television lens 100, the CPU 101 compares the current zoom position supplied from the counter 110 with the command signal from the command device 121 so as to calculate a new zoom command position. The CPU 101 then outputs the new zoom command position to the D/A converter 102 to control the position of the zoom lens 105. A two-phase pulse interface signal 301, outputted from the digital encoder 109, is transmitted as a zoom position signal to the virtual system 200. The virtual system 200 includes a CPU 201 and a counter 202. The counter 202 calculates the zoom position of the zoom lens 105 based on the two-phase pulse interface signal 301 received from the television lens 100. The CPU 201 receives, in addition to the zoom position signal from the counter 202, a focus position signal from a focus counter (not shown), an iris position signal, an extender position signal, and a video signal from a television camera (not shown) connected to the television lens 100. Computer-generated image data created in the virtual system 200 is processed based on information on the position of the zoom lens 105, etc., so as to be matched with a video signal from the television camera. The processed computer-generated image data and the video signal from the television camera are merged together to create a virtual video image (synthesized video image) not producing an unconventional view to the user.

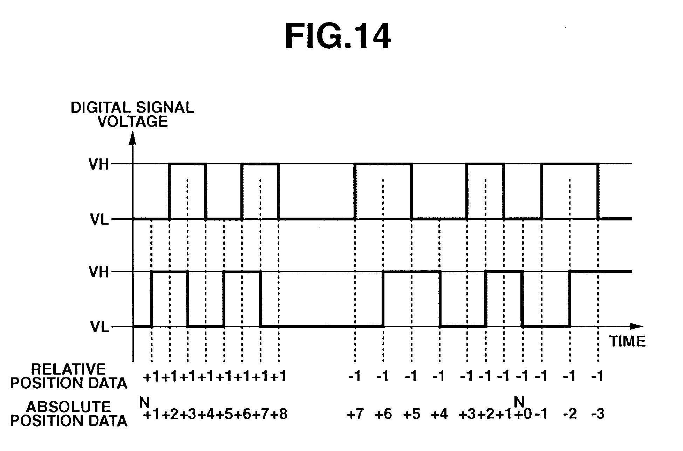

Fig. 14 illustrates a diagram illustrating the two-phase pulse interface signal 301, which is transmitted from the television lens 100 to the virtual system 200. The two-phase pulse interface signal 301 is digitized as illustrated in Fig. 14 and is used to calculate relative position data and absolute position data. In a case where a television lens incorporating a digital encoder is connected to a virtual system as shown in Fig. 13, detection information obtained from the digital encoder, which is also used for servo control, is transmitted to the virtual system to perform image synthesis. However, in order to enable detection information obtained from the digital encoder, which is also used for servo control of the zoom lens, to be transmitted to the virtual system, the configuration of the television lens needs to be modified.

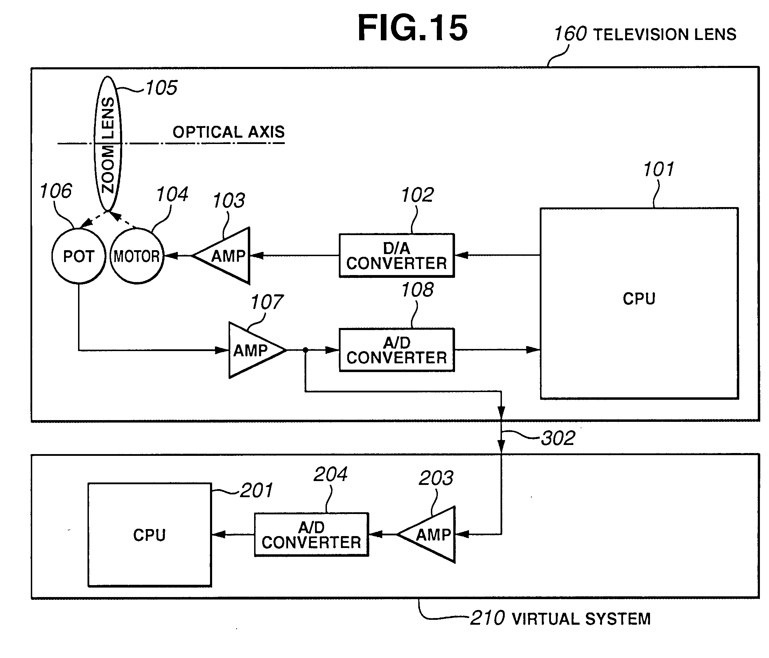

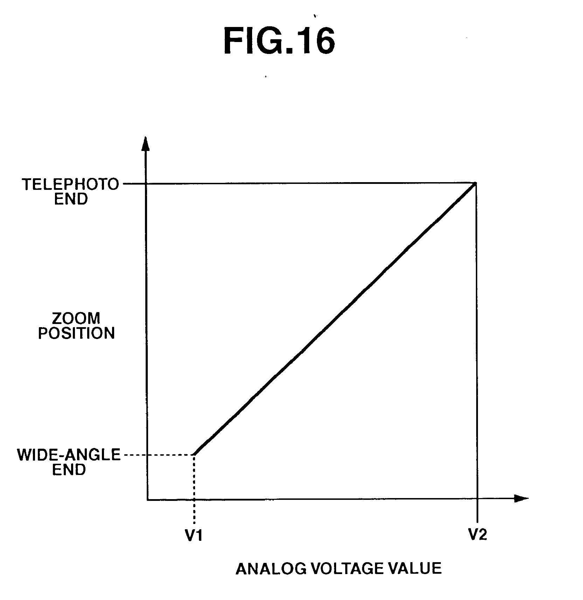

Fig. 15 illustrates a block diagram schematically showing a conventional image synthesis system in which a virtual system 210 is connected to a television lens 160 incorporating a potentiometer in place of a digital encoder. Since a position detection unit for detecting the zoom position of the zoom lens 105 is a potentiometer (POT) 106 configured to output an analog signal, the television lens 160 includes an operational amplifier 107 and an A/D (analog-to-digital) converter 108. While, in Fig. 15, only the zoom lens 105 is shown as a movable optical member in the television lens 160, a focus lens, an iris mechanism, and an extender are also configured in the similar manner as the zoom lens 105. In addition, the virtual system 210 includes an operational amplifier 203 for interface matching and an A/D converter 204 in place of the counter 202. In such a configuration, an interface signal 302 transmitted from the television lens 160 to the virtual system 210 is an analog voltage signal, as illustrated in Fig. 16.

In the case where the television lens, incorporating a potentiometer in place of a digital encoder, is connected to a virtual system as illustrated in Fig. 15, detection information obtained from the potentiometer 106, which is also used for servo control, is transmitted to the virtual system to perform image synthesis. However, in order to enable detection information obtained from the potentiometer, to be transmitted to the virtual system, the configuration of the television lens needs to be modified.

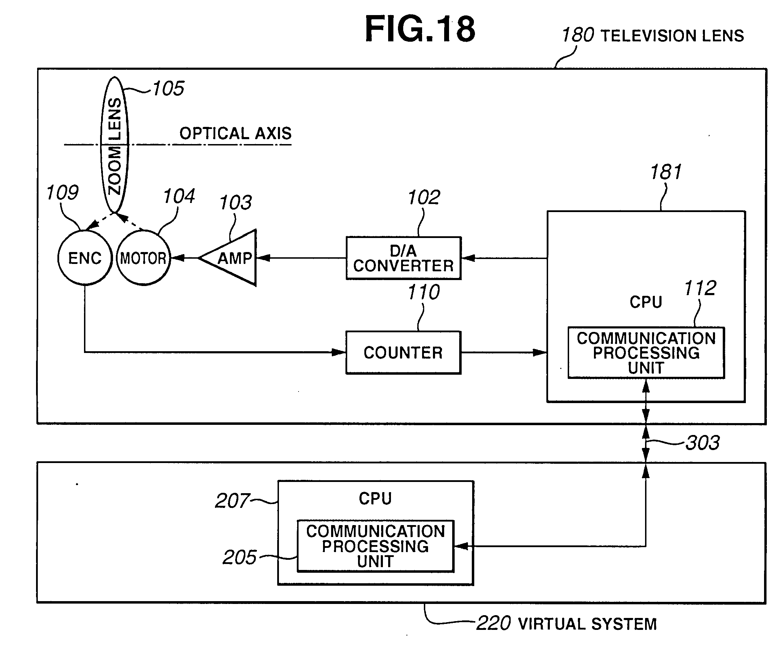

Fig. 18 illustrates a block diagram schematically showing a conventional image synthesis system in which a virtual system 220 is connected to a television lens 180 via data communication. In Fig. 18, a signal from the digital encoder 109 is not directly transmitted to the counter 202 (Fig. 13) in the virtual system 200. More specifically, the CPU 181 in the television lens 180 reads a value from the counter 110, and a communication processing unit 112 contained in the CPU 181 transmits, via data communication, position information on the zoom lens 105, the focus lens, etc., as an interface signal 303 to a communication processing unit 205 of the CPU 207 in the virtual system 220 so as to create a virtual video image (synthesized video image).

In a case where a television lens is connected to a virtual system via data communication as illustrated in Fig. 18, a dedicated communication line needs to be provided in addition to communication lines used for communication between the television lens and demands. Therefore, the configuration of the standard television lens needs to be modified.

As described above, in conventional television lenses, there is no connection method (interface) applicable to connect with a virtual system. Accordingly, the configuration of the standard television lens needs to be modified with respect to both hardware and software.

In particular, connection methods (interfaces) are limited depending upon the type of position detection unit of the television lens. Additionally, a connection method using data communication with a dedicated communication protocol can depend on the request from the virtual system. Thus, standard television lens cannot have standard connection methods (interfaces).

In addition, a conventional virtual system possesses optical data corresponding to a television lens in use, and refers to the optical data to calculate data corresponding to the relative positions of a zoom lens, a focus lens, etc... Therefore, optical data have to be exchanged each time television lenses are exchanged.

### SUMMARY OF THE INVENTION

At least one exemplary embodiment is directed to a lens apparatus which can be configured to be used with an image synthesis apparatus via a standard connection unit. In at least one exemplary embodiment, the standard connection unit can be disposed between the lens apparatus and the image synthesis apparatus, without having to modify the configuration of the lens apparatus. In yet a further exemplary embodiment, a connection method using data communication with a general-purpose and standard protocol can be used with the connection unit.

In addition, at least one exemplary embodiment is directed to an image synthesis system in which it is unnecessary to change optical data stored in an image synthesis apparatus even if lens apparatuses are exchanged.

In at least one exemplary embodiment, a lens apparatus configured to communicate with an image synthesis apparatus can include a movable optical member, a position detection unit configured to detect a position of the movable optical member to generate a position information signal, an arithmetic processing unit configured to, based on the position information signal generated by the position detection unit, create an optical information signal that is recognizable by the image synthesis apparatus, and a communication unit configured to transmit the optical information signal to the image synthesis apparatus.

Particularly, in at least one further exemplary embodiment, a lens apparatus can include at least one movable optical member, (e.g., a zoom lens, a focus lens, an iris mechanism, or an extender), a position detection unit configured to detect a position of the movable optical member, and a control unit configured to recognize position detection information obtained by the position detection unit and to perform driving control of the movable optical member and, in some embodiments, communicate with a command instruction unit for a user. The lens apparatus can further include a signal input/output unit for image synthesis. The signal input/output unit can have three transmission methods, including a first transmission method which can use an analog voltage signal, a second transmission method which can use a digital pulse train, and a third transmission method which can use data communication from the control unit. Accordingly, the lens apparatus can be connected to an image synthesis apparatus even if any one of the first, second, and third transmission methods is requested by the image synthesis apparatus. Thus, the image synthesis system can be configured without modifying the configuration of the lens apparatus.

At least one exemplary embodiment is configured to facilitate connection between the lens apparatus and the image synthesis apparatus even if the image synthesis apparatus does not possess optical data inherent in the lens apparatus. In addition, data transmitted by the signal input/output unit for image synthesis can include relative position data on the zoom lens, the focus lens, the iris mechanism, the extender, or other optical elements. Accordingly, using this particular exemplary embodiment, connection between the lens apparatus and the image synthesis apparatus can be established, even if the image synthesis apparatus does not possess optical data inherent in the lens apparatus.

In another exemplary embodiment, the lens apparatus can further include a storage unit, which can store optical data inherent in the lens apparatus. The lens apparatus can create transmission data from new optical data by using position information (e.g., on the zoom lens, the focus lens, the iris mechanism, the extender, or other optical elements), an arithmetic program, and an arithmetic processing unit. The optical data can be at least one of an angle of view, a principal point, an object distance, a focal length, a depth of field, a depth of focus, and an iris F-number that vary in association with the driving of the zoom lens, the focus lens, the iris mechanism, the extender, or other optical elements.

In at least one exemplary embodiment, optical data stored in the lens apparatus can be used to calculate new optical data associated with the driven position of the zoom lens, the focus lens, the iris mechanism, the extender, or other optical elements and transmitted to the image synthesis apparatus. Accordingly using this particular exemplary embodiment, the image synthesis apparatus need not possess data inherent in the lens apparatus, nor does the image synthesis apparatus need to calculate optical position data for image synthesis.

In a further exemplary embodiment, the lens apparatus can further includes a data structure selection unit configured to select and set a data structure of transmission data transmitted by the signal input/output unit for image synthesis. Accordingly, in an exemplary embodiment, the data structure corresponding to data for the image synthesis apparatus can be obtained, and an image synthesis system can be configured without modifying the configuration of the lens apparatus.

In a further exemplary embodiment, transmission data transmitted by the signal input/output unit for image synthesis can be transmitted in synchronization with specific received data or a specific input signal. Accordingly, when a specific command is received from the image synthesis system in synchronization with a video signal, or when a specific input signal is received, the exemplary embodiment of the lens apparatus can transmit data to the image synthesis apparatus. Thus, using this particular exemplary embodiment, the image synthesis system that is synchronized with a video signal can be configured without modifying the configuration of the lens apparatus.

Other features of the present invention will become apparent to those skilled in the art upon reading the following detailed description of exemplary embodiments thereof when taken in conjunction with the accompanying drawings, in which like reference characters designate the same or similar parts throughout the figures thereof.

### BRIEF DESCRIPTION OF THE DRAWINGS

Embodiments of the present invention will become apparent from the following detailed description, taken in conjunction with the drawings.

Fig. 1 illustrates a schematic block diagram showing a television lens according to a first exemplary embodiment.

Figs. 2A and 2B illustrate diagrams showing digital pulse trains outputted from the television lens according to the first exemplary embodiment.

Fig. 3 illustrates a flow chart showing a processing operation performed by a CPU included in the television lens according to the first exemplary embodiment.

Fig. 4 illustrates a schematic block diagram showing a television lens according to a modification of the first exemplary embodiment.

Fig. 5 illustrates a flow chart showing a processing operation performed by a CPU included in the television lens according to the modification of the first exemplary embodiment.

Fig. 6 illustrates a schematic block diagram showing an image synthesis system including the television lens according to the first exemplary embodiment.

Fig. 7 illustrates a diagram showing an example of a communication data string including relative position data transmitted from a communication processing unit included in the television lens according to the first exemplary embodiment.

Fig. 8 illustrates a schematic block diagram showing a television lens according to a second exemplary embodiment.

Fig. 9 illustrates a diagram showing an example of a communication data string including optical data transmitted from a communication processing unit included in the television lens according to the second exemplary embodiment.

Fig. 10 illustrates a diagram showing an example of a communication data string set by a data structure selection setting unit according to a third exemplary embodiment.

Fig. 11 illustrate a diagram showing the sequence of transmission of a communication data string at the time of receiving a synchronization command in a television lens according to a fourth exemplary embodiment.

Fig. 12 illustrate a diagram showing the sequence of transmission of a communication data string at the time of receiving a vertical synchronization signal according to the fourth exemplary embodiment.

Fig. 13 illustrate a schematic block diagram showing a conventional image synthesis system.

Fig. 14 illustrate a diagram showing digital pulse trains outputted from a television lens in the conventional image synthesis system shown in Fig. 13.

Fig. 15 illustrate a schematic block diagram showing another conventional image synthesis system.

Fig. 16 illustrate a diagram showing an analog voltage signal outputted from a television lens in the conventional image synthesis system shown in Fig. 15.

Fig. 17 illustrate a schematic block diagram showing a conventional television lens system.

Fig. 18 illustrate a schematic block diagram showing a further conventional image synthesis system.

### DETAILED DESCRIPTION OF THE EMBODIMENTS

The following description of at least one exemplary embodiment is merely illustrative in nature and is in no way intended to limit the invention, its application, or uses.

Processes, techniques, apparatus, and materials as known by one of ordinary skill in the art may not be discussed in detail but are intended to be part of the enabling description where appropriate. For example analog to digital (A/D) converters are used in some exemplary embodiments. Any type of A/D converter and material that can be used to form an analog to digital converter should fall within the scope of exemplary embodiments. Likewise for the rest of the elements of exemplary embodiments.

Additionally the actual size of the elements of any lens apparatus or other elements of exemplary embodiments may not be discussed, however any size from macro to micro to nano are intended to lie within the scope of exemplary embodiments (e.g., lenses with diameters of nanometer size, micro size, centimeter, and meter sizes).

Additionally exemplary embodiments are not limited to visual systems, for example the system can be designed for use with infrared and other wavelength systems.

Exemplary embodiments will be described in detail below with reference to the drawings.

First Exemplary Embodiment

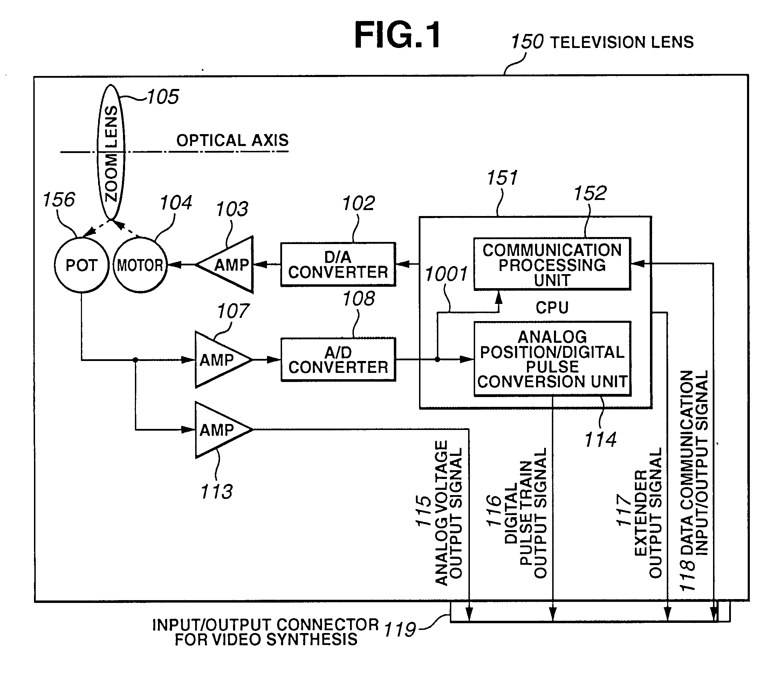

Fig. 1 illustrates a schematic block diagram showing a television lens 150 incorporating a potentiometer as a position detection unit according to a first exemplary embodiment.

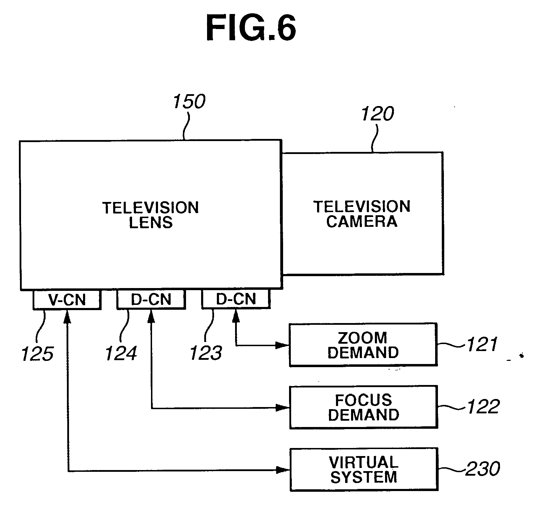

In Fig. 1, the television lens 150 can include a CPU (central processing unit) 151, a D/A (digital-to-analog) converter 102, a power amplifier 103, a motor 104, a zoom lens 105, a zoom potentiometer 156, an operational amplifier 107, an A/D (analog-to-digital) converter 108, and an operational amplifier 113. The CPU 151 controls each part of the television lens 150. The D/A converter 102 receives a command value from the CPU 151 for performing zooming. The power amplifier 103 amplifies the command value from the D/A converter 102. The motor 104 is driven based on an amplified signal from the power amplifier 103. The zoom lens 105 is driven by the motor 104 to perform zooming. The zoom potentiometer 156 functions as an analog zoom position detection unit operatively connected with the zoom lens 105. The operational amplifier 107 functions as a matching circuit to enable an analog signal from the zoom potentiometer 156 to be inputted into the CPU 151. The A/D converter 108 digitizes the matched analog zoom position signal. The operational amplifier 113 transmits the analog position signal from the zoom potentiometer 156, as an analog voltage output signal 115, to an external virtual system 230 (Fig. 6). The CPU 151 includes a communication processing unit 152 and an analog position/digital pulse conversion unit 114. The analog position/digital pulse conversion unit 114 converts position data received from the A/D converter 108 into a digital pulse train output signal 116 and transmits the digital pulse train output signal 116 to the external virtual system 230.

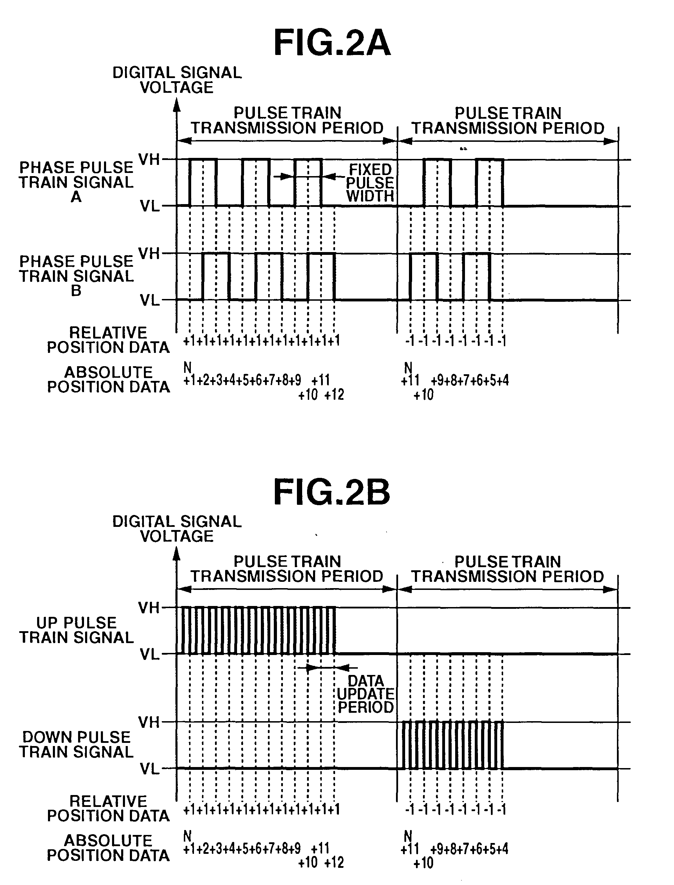

Figs. 2A and 2B illustrate diagrams showing an example of digital pulse trains outputted from the analog position/digital pulse conversion unit 114. In particular, Fig. 2A illustrates a two-phase phase-difference signal, and Fig. 2B illustrates a two-phase up/down pulse signal. The communication processing unit 152 converts position information on the zoom lens 105, a focus lens, an iris mechanism, an extender, and other optical elements, received (1001) by the CPU 151 into a data communication input/output signal 118 and transmits the data communication input/output signal 118 to the external virtual system 230 via data communication (e.g., physical layer interfaces, RS-232, RS-422, RS-456, USB (universal serial bus), Bluetooth®, equivalents, and other communication protocol and methods as known by one of ordinary skill in the relevant art). The CPU 151 also transmits an extender output signal 117, which is a one-bit or two-bit digital output, to the external virtual system 230.

The television lens 150 further can include an input/output connector 119 for image synthesis. The input/output connector 119 can be used to transmit three types of signals to the external virtual system 230 (e.g. , the analog voltage output signal 115, the digital pulse train output signal 116, and the data communication input/output signal 118), in addition to the extender output signal 117. While, in Fig. 1, the zoom lens 105 is shown as a movable optical member in the television lens 150, the focus lens, the iris mechanism, and the extender can also be configured to move in a similar manner as the zoom lens 105.

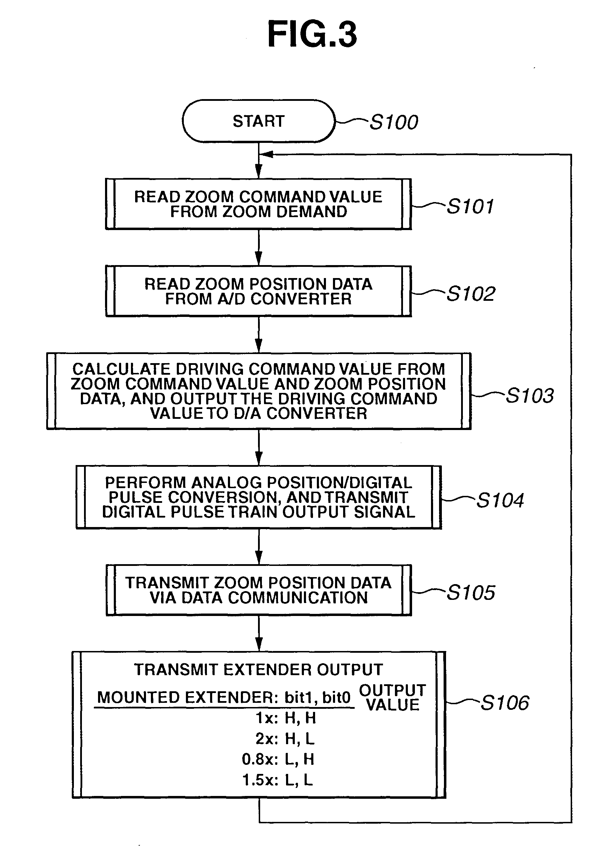

Fig. 3 illustrates a flow chart showing a processing operation performed by the CPU 151 in the television lens 150 configured as described above. In Fig. 3, the CPU 151 starts processing at step S100. At step S101, the CPU 151 reads a zoom command value from a zoom demand 121 (Fig. 6) , which is a command device which can be connected to the television lens 150. At step S102, the CPU 151 reads zoom position data from the A/D converter 108.

At step S103, the CPU 151 calculates a driving command value for driving the zoom lens 105 from the zoom command value obtained at step S101 and the zoom position data obtained at step S102 and outputs the driving command value to the D/A converter 102. Accordingly, the zoom motor 104, the zoom lens 105, and the zoom potentiometer 156 can be sequentially operated in an interlocking manner. Thus, the zoom lens 105 is moved along an optical axis to obtain a desired video image.

At step S104, the analog position/digital pulse conversion unit 114 in the CPU 151 is configured to process and transmit the digital pulse train output signal 116 to the external virtual system 230. Thus, the analog position/digital pulse conversion unit 114 generates two-phase digital pulse trains shown in Figs. 2A and 2B to enable position information to be transmitted to the external virtual system 230.

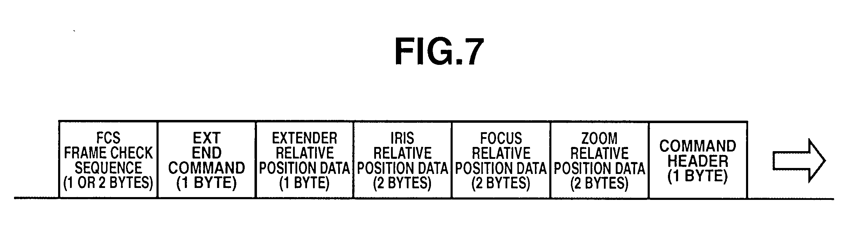

At step S105, the communication processing unit 152 in the CPU 151 is configured to process and transmit the zoom position data obtained at step S102 to the external virtual system 230 in accordance with a predetermined communication format. Fig. 7 illustrates an example of a data string transmitted at step S105. In Fig. 7, the data string processed and transmitted at step S105 includes relative position data on the zoom lens 105, the focus lens, the iris mechanism, and the extender.

At step S106, the CPU 151 is configured to process and transmit a one-bit or two-bit digital value corresponding to the magnification value of the mounted extender, as the extender output signal 117, to the external virtual system 230. The CPU 151 then returns to step S101 to repeat the above-described processing.

In addition, when the zoom potentiometer 156 is moved in association with driving of the zoom lens 105, an analog voltage output signal 115, corresponding to the movement of the zoom potentiometer 156, can be generated to be transmitted to the external virtual system 230 through the operational amplifier 113.

The television lens 150 according to the first exemplary embodiment can have the above-described configuration and perform processing in accordance with the above-described flow chart of Fig. 3. In addition, the television lens 130 can include the input/output connector 119 for image synthesis to employ three transmission methods for position information on the zoom lens 105, the focus lens, the iris mechanism, the extender, and other optical elements (e. g. , a method which can use the analog voltage output signal 115, a method which can use the digital pulse train output signal 116, and a method which can use the data communication input/output signal 118). Thus, the television lens 150 according to the first exemplary embodiment can be connected to any virtual system 230 described in the conventional image synthesis systems without modifying the configuration of the television lens 130.

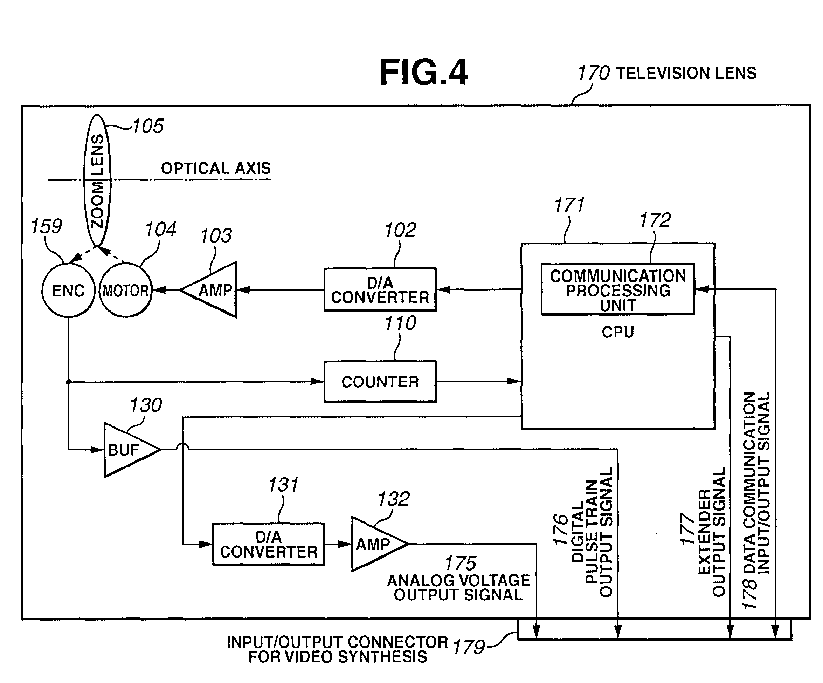

Fig. 4 illustrates a schematic block diagram showing a television lens 170 incorporating a digital encoder 159 as a position detection unit according to a modification of the first exemplary embodiment.

In Fig. 4, the television lens 170 includes a digital encoder 159 as a zoom position detection unit in place of the potentiometer 156 shown in Fig. 1. The digital encoder 159 outputs a two-phase digital signal indicating the zoom position of the zoom lens 105. In Fig. 4, the same or similar elements as those shown in Fig. 1 are omitted from description here (e. g. , 175 in Fig. 4 is similar to 115 in Fig. 1, as are 176 to 116, 177 to 117, and 178 to 118). The television lens 170 further includes a counter 110, a buffer amplifier 130, an additional D/A converter 131, and an operational amplifier 132. The counter 110 counts an output value from the digital encoder 159 to obtain the current zoom position of the zoom lens 105. The buffer amplifier 130 converts the output value from the digital encoder 159 into a digital pulse train output signal 176 to be transmitted to the external virtual system 230. The D/A converter 131 converts a digital signal indicating the zoom position obtained by the CPU 171 through the counter 110 into an analog voltage output signal 175. The operational amplifier 132 transmits the analog voltage output signal 175 to the external virtual system 230.

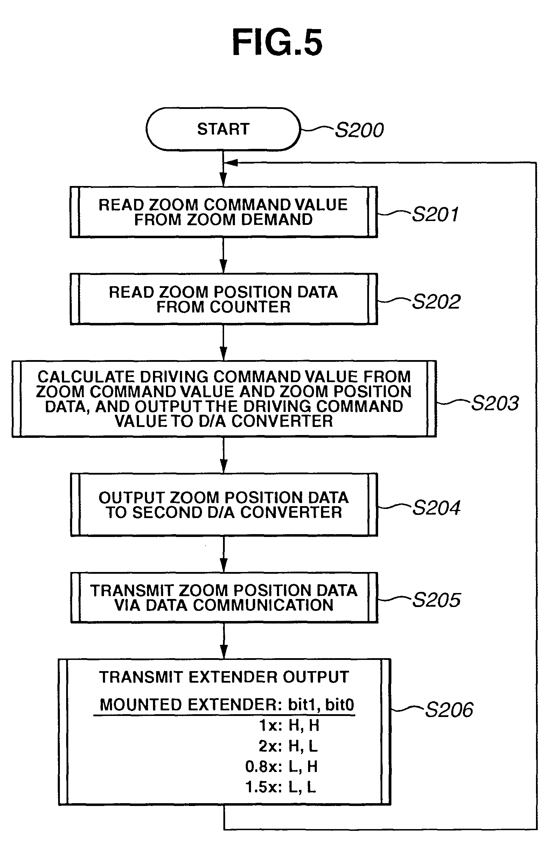

Fig. 5 illustrates a flow chart showing a processing operation performed by the CPU 171 in the television lens 170 shown in Fig. 4. In Fig. 5, the CPU 171 starts processing at step S200. At step S201, the CPU 171 reads a zoom command value from the zoom demand 121, which is a command device that can be operatively connected to the television lens 170. At step S202, the CPU 171 reads zoom position data from the counter 110.

At step S203, the CPU 171 calculates a driving command value for driving the zoom lens 105 from the zoom command value obtained at step S201 and the zoom position data obtained at step S202 and outputs the driving command value to the D/A converter 102. Accordingly, the zoom motor 104, the zoom lens 105, and the digital encoder 159 are sequentially operated in an interlocking manner. Thus, the zoom lens 105 is moved along an optical axis to obtain a desired video image.

At step S204, the CPU 171 outputs the zoom position data obtained at step S202 to the D/A converter 131 so as to transmit the analog voltage output signal 175 to the external virtual system 230 thorough the operational amplifier 132.

At step S205, the communication processing unit 152 in the CPU 101 is configured to process and transmit the zoom position data obtained at step S202 to the external virtual system 230 in accordance with a predetermined communication format.

At step S206, the CPU 171 performs processing for transmitting a one-bit or two-bit digital value corresponding to the magnification value of the mounted extender to the external virtual system 230. The CPU 171 then returns to step S201 to repeat the above-described processing.

In addition, when the digital encoder 159 is moved in association with driving of the zoom lens 105, a digital pulse train output signal 176 corresponding to the movement of the digital encoder 159 is generated to be transmitted to the external virtual system 230 through the buffer amplifier 130.

The television lens 170 shown in Fig. 4 has the above-described configuration and performs processing in accordance with the above-described flow chart of Fig. 5. In addition, the television lens 170 includes the input/output connector 179 for image synthesis to employ three transmission methods for position information on the zoom lens 105, the focus lens, the iris mechanism, the extender, and other optical elements, (e.g., a method which can use the analog voltage output signal 175, a method which can use the digital pulse train output signal 176, and a method which can use the data communication input/output signal 178). Accordingly, the television lens 170 shown in Fig. 4 can be connected to a virtual system 230 (e.g., as described in the conventional image synthesis systems) without modifying the configuration of the television lens 170.

In the television lens 150 shown in Fig. 1, the potentiometer 156 is used as a position detection unit, and in the television lens 170 shown in Fig. 4, the digital encoder 159 is used as a position detection unit. However, exemplary embodiments can use any number of position detection devices, as known by one of ordinary skill in the relevant art, where a television lens, in accordance to at least one exemplary embodiment, can be configured to have three transmission methods for position information on the zoom lens 105, the focus lens, the iris mechanism, the extender, and other optical elements (e.g. , a method which can use the analog voltage output signal 115 or 175, a method which can use the digital pulse train output signal 116 or 176, and a method which can use the data communication input/output signal 118 or 178). Accordingly, a television lens, in accordance with at least one exemplary embodiment, can be connected to any virtual system 230 (e.g., 200, 210, 220, equivalents, and other virtual systems as known by one of ordinary skill in the relevant art, or as described in the conventional image synthesis systems) without modifying the configuration of the television lens.

Fig. 6 illustrates a schematic block diagram showing an image synthesis system including the television lens 150 according to the first exemplary embodiment. In Fig. 6, the television lens 150 can includes a connector 125 for connection to the virtual system 230 in addition to demand connectors 123 and 124. Accordingly, the television lens 150 can be connected to a virtual system 230 (e.g., 200, 210, 220, equivalents, and other virtual systems as known by one of ordinary skill in the relevant art, or as described in the conventional image synthesis systems) without modifying the configuration of the television lens 150.

Fig. 7 illustrates a diagram showing an example of a communication data string transmitted from the communication processing unit 152 of the television lens 150 according to the first exemplary embodiment. In Fig. 7, a command header (1 byte) indicative of data transmission to the virtual system 230 is transmitted first. After that, relative position data (each 2 bytes) on the zoom lens 105, the focus lens, the iris mechanism, and the extender are transmitted. Then, an end command (1 byte) indicative of the end of the command data string and a frame check sequence (1 or 2 bytes) serving as an error correction code for the command data string are additionally transmitted. Transmitting such a stylized data string from the television lens 150 facilitates reliable connection of the television lens 150 to the virtual system 230. Accordingly, an image synthesis system can be established without modifying the configuration of the television lens 150.

In further exemplary embodiments, the data transmission from the television lens 150 to the virtual system 230 can be by methods, techniques and systems as known by one of ordinary skill in the relevant arts (e.g., may be performed by wireless communication).

Second Exemplary Embodiment

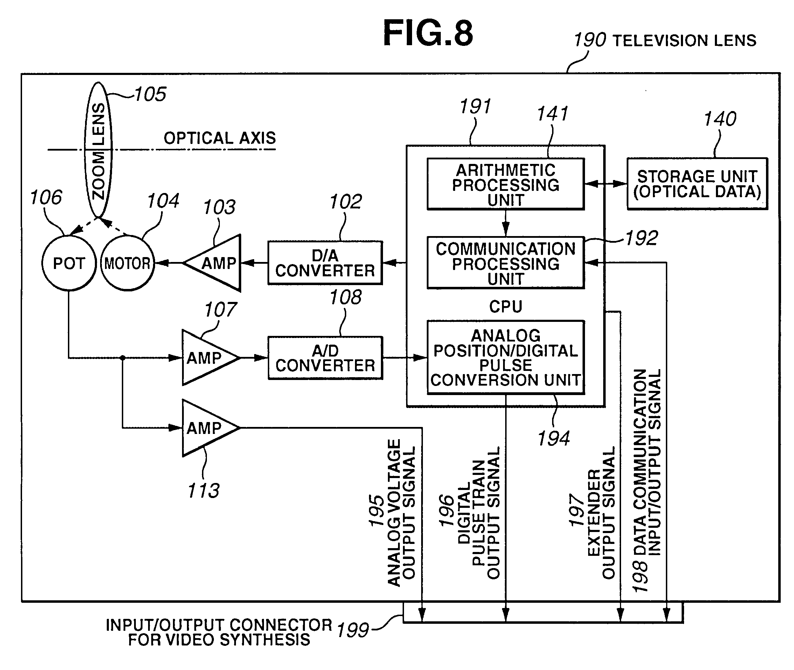

Fig. 8 illustrates a schematic block diagram showing a television lens 190 according to a second exemplary embodiment. As compared with Figs. 1 and 4, the television lens 190 additionally includes a storage unit 140 and an arithmetic processing unit 141. The storage unit 140 has stored thereon values inherent in the television lens 190 as optical data (e. g. , an angle of view, a principal point, an object distance, a focal length, a depth of field, a depth of focus, an F-number, other equivalent optical properties and as known by one of ordinary skill in the relevant art) corresponding to the relative position of the zoom lens 105, the relative position of the focus lens, the relative position of the iris mechanism, and the relative position of the extender. The arithmetic processing unit 141 calculates optical data values in the relative positions of the zoom lens 105, the focus lens, the iris mechanism, the extender, and other optical elements, from the optical data stored on the storage unit 140 and the relative position information on the zoom lens 105, the focus lens, the iris mechanism, the extender, and other optical elements, obtained from position detectors (e.g., potentiometers or encoders).

The CPU 191 in the television lens 190 shown in Fig. 8 performs a processing operation according to the same or similar processing flow as those shown in Figs. 3 and 5 except that the arithmetic processing unit 141 performs data communication processing at step S105 or S205 as follows. At step S105 or S205, the arithmetic processing unit 141 calculates, using an arithmetic operation (e.g., interpolation, linear interpolation), optical data values corresponding to the current positions from the relative position information on the zoom lens 105, the focus lens, the iris mechanism, the extender, and other optical elements, obtained prior to step S105 or S205 and the optical data (e.g., discrete values such as an angle of view, a principal point, an object distance, a focal length, a depth of field, a depth of focus, an F-number, other equivalent optical properties and as known by one of ordinary skill in the relevant art), stored on the storage unit 140. The arithmetic processing unit 141 can then output the obtained optical data values as a communication data string to the external virtual system 230 through the communication processing unit 192.

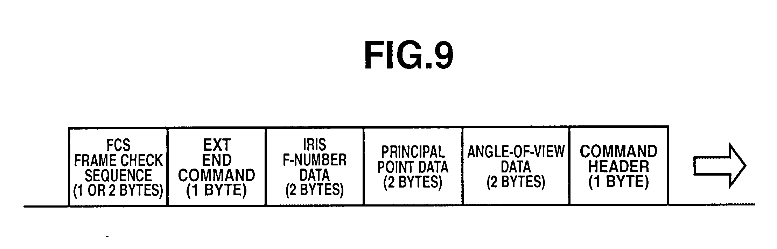

Fig. 9 illustrates an example of the communication data string that can be transmitted from the communication processing unit 192 of the television lens 190 shown in Fig. 8. In Fig. 9, a command header (1 byte), indicative of data transmission to the virtual system 230 is first transmitted. After that, angle-of-view data, principal point data, and iris F-number data (each 2 bytes) are transmitted. Then, an end command (1 byte) indicative of the end of the command data string and a frame check sequence (1 or 2 bytes) serving as an error correction code for the command data string are additionally transmitted. Transmitting such a stylized data string from the television lens 190 facilitates reliable connection of the television lens 190 to the virtual system 230. Accordingly, an image synthesis system can be established without modifying the configuration of the television lens 190. In addition, in accordance with exemplary embodiments, transmitting the optical data values obtained from the relative position information, reduces the need for the virtual system 230 to store optical data on each television lens, to perform an arithmetic operation, or to change optical data at the time of exchange of television lenses. Accordingly, an image synthesis system having good responsivity can be established without modifying the configuration of the television lens.

Third Exemplary Embodiment

In a third exemplary embodiment, the television lens 190 shown in Fig. 8 can additionally include a selection setting unit configured to selectively set the structure of a communication data string to a data structure for the virtual system 230. The selection setting unit can be implemented by using a setting switch, which can be included in the television lens 190, a communication command (selection setting command) from the virtual system 230, or from other equivalent systems and/or switching devices.

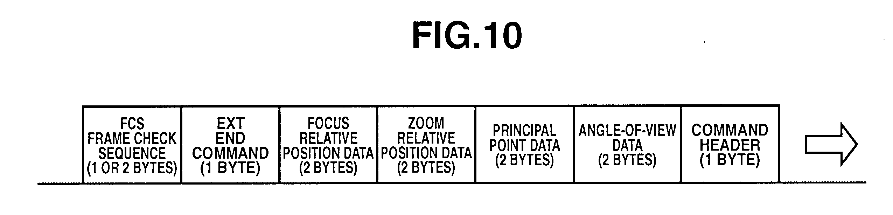

Fig. 10 illustrates an example of the communication data string transmitted to the virtual system 230 according to the third exemplary embodiment. In Fig. 10, a command header (1 byte) indicative of data transmission to the virtual system 200 is first transmitted. After that, angle-of-view data and principal point data (each 2 bytes), which are optical data values, and zoom relative position data and focus relative position data (each 2 bytes) are sequentially transmitted. Then, an end command (1 byte) indicative of the end of the command data string and a frame check sequence (1 or 2 bytes) serving as an error correction code for the command data string are additionally transmitted. Providing the selection setting unit in the television lens as described above facilitates the structure of a communication data string to be set to a data structure for the virtual system and also facilitates a data string having relative position data and optical data mixed with each other to be transmitted. Accordingly, an image synthesis system having good responsivity can be established without modifying the configuration of the television lens.

Fourth Exemplary Embodiment

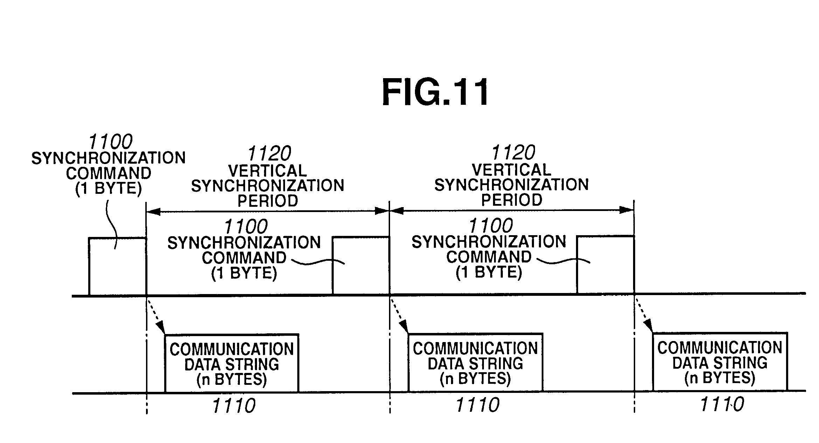

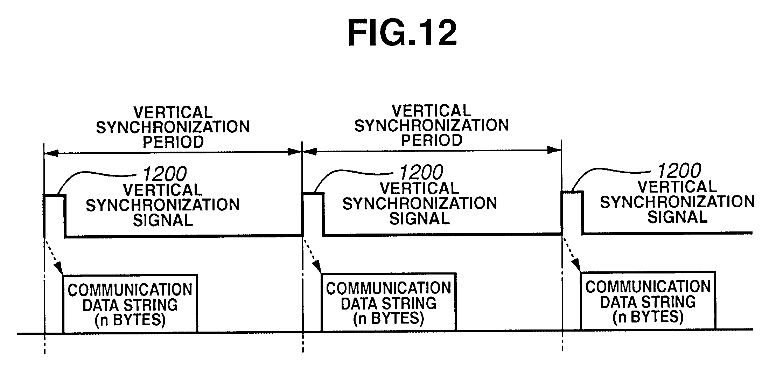

In a fourth exemplary embodiment, the television lens 190 illustrated in Fig. 8 can additionally include a synchronization unit (not shown) configured to synchronize the television lens 190 with the virtual system 230. Figs. 11 and 12 are diagrams each illustrating the sequence of transmission of a communication data string according to the fourth exemplary embodiment.

In the sequence illustrated in Fig. 11, a specific command (1 byte) 1100 from the virtual system 230 is used as a synchronization command, and when receiving the synchronization command, the television lens 190 immediately transmits a communication data string 1110. Accordingly, as the synchronization command 1100 is received from the virtual system 230 at intervals of a video synchronization period (vertical synchronization period 1120) , the communication data string 1110 synchronized with the video synchronization period 1120 is transmitted from the television lens 190. Transmitting such a stylized data string from the television lens 190 enables the television lens 190 to be reliably connected to the virtual system 230. Accordingly, an image synthesis system having good responsivity and synchronized with a video signal can be established without modifying the configuration of the television lens 190.

In the sequence illustrated in Fig. 12, the television lens 190 receives a vertical synchronization signal 1200 in place of the synchronization command transmitted from the virtual system 230. In this case, a similar effect as that in the sequence shown in Fig. 11 can be obtained.

As described above, a television lens can include a movable optical member (e.g., a zoom lens, a focus lens, an iris mechanism, or an extender); a position detection unit configured to detect the position of the movable optical member; and a control unit configured to recognize position detection information obtained by the position detection unit and to perform driving control of the movable optical member and communication with a command instruction unit for a user. The television lens further can includes a signal input/output unit for image synthesis. The signal input/output unit can have three transmission methods, including a first transmission method which can use an analog voltage signal, a second transmission method which can use a digital pulse train, and a third transmission method which can use data communication from the control unit. The signal input/output unit can be used for a virtual system. Accordingly, in at least one exemplary embodiment, the television lens can be configured to connect with the virtual system even if any of the first, second, and third transmission methods is requested by the virtual system. Thus, in accordance with such an exemplary embodiment, an image synthesis system can be established without modifying the configuration of the television lens.

In addition, data transmitted by the signal input/output unit for image synthesis can include relative position data on the zoom lens, the focus lens, the iris mechanism, the extender, or other optical elements. Accordingly, even if the virtual system does not possess optical data inherent in the television lens, in at least one exemplary embodiment the television lens can be connected to the virtual system. Thus, in accordance with such an exemplary embodiment, an image synthesis system can be established without modifying the configuration of the television lens.

In addition, the television lens can further include a storage unit storing optical data inherent in the television lens. The television lens can create new optical data as transmission data by using position information (e.g., on the zoom lens, the focus lens, the iris mechanism, the extender, or other optical element), an arithmetic program, and an arithmetic processing unit. The optical data can be at least one of an angle of view, a principal point, an object distance, a focal length, a depth of field, a depth of focus, and an iris F-number that vary in association with driving of the zoom lens, the focus lens, the iris mechanism, the extender, or other optical element. Optical data stored in the television lens facilitates new optical data associated with the driven position of the zoom lens, the focus lens, the iris mechanism, the extender, or other optical elements to be calculated and transmitted to the virtual system. Accordingly, the need for the virtual system to possess data inherent in the television lens and to calculate optical position data for image synthesis is reduced. Thus, in accordance with such an exemplary embodiment, an image synthesis system can be established without modifying the configuration of the television lens. In addition, since the need for calculation in the virtual system is reduced, an image synthesis system having good responsivity can be configured.

In addition, in accordance with at least one exemplary embodiment the television lens can further include a data structure selection setting unit configured to select and set a data structure of transmission data transmitted by the signal input/output unit for image synthesis. Accordingly, in such an exemplary embodiment a data structure, corresponding to data for the virtual system, can be obtained, and an image synthesis system can be established without modifying the configuration of the television lens. In addition, since data for the virtual system can be efficiently transmitted, the performance of the image synthesis system can be improved.

In addition, transmission data transmitted by the signal input/output unit for image synthesis can be transmitted in synchronization with specific received data or a specific input signal. Accordingly, when a specific command is received from the image synthesis system in synchronization with a video signal, or when a specific input signal is received, the television lens can transmit data to the virtual system. Thus, an image synthesis system that is synchronized with a video signal can be established without modifying the configuration of the television lens.

Furthermore, data communication between the television lens and the virtual system may be performed by wireless communication or by wired communication.

Furthermore, command data strings described in the above embodiments are shown only as examples. Additional commands, such as an end command or a frame check sequence, may be omitted.

In at least one exemplary embodiment, optical information that is recognizable by a virtual system is created in a lens apparatus. Thus, an image synthesis system can be provided with a reduced need to change optical information stored in the virtual system if lens apparatuses are exchanged.

While the present invention has been described with reference to exemplary embodiments, it is to be understood that the invention is not limited to the disclosed embodiments. The scope of the following claims is to be accorded the broadest interpretation so as to encompass all modifications, equivalent structures and functions.

## Claims

1. A lens apparatus capable of communicating with an image synthesis apparatus, the lens apparatus comprising:
a movable optical member;
a position detection unit configured to detect a position of the movable optical member and to generate a position information signal;
an arithmetic processing unit configured to, based on the position information signal generated by the position detection unit, create optical information data; and
a communication processing unit configured to transmit the optical information data to the image synthesis apparatus.

2. The lens apparatus according to claim 1, wherein the position information signal includes position information on at least one of a zoom lens, a focus lens, an iris mechanism, and an extender, and
wherein the optical information data includes at least one of angle-of-view information, principal point information, object distance information, focal length information, depth-of-field information, depth-of-focus information, and iris F-number information.

3. The lens apparatus according to claim 1 or 2, further comprising a selection unit configured to select data_that the communication processing unit is configured to transmit, wherein the data is at least one of the optical information data and position data in the position information signal.

4. The lens apparatus according to claim 3, wherein the selection unit selects the data in accordance with a communication commands from the image synthesis apparatus.

5. The lens apparatus according to one of claims 1 to 4, wherein the position information signal includes relative position information.

6. An image capture apparatus comprising:
the lens apparatus according to one of claims 1 to 5; and
a camera apparatus mounted on the lens apparatus.

7. An image synthesis system comprising:
the lens apparatus according to one of claims 1 to 5; and
the image synthesis apparatus connected to the lens apparatus via a communication line.

8. An image synthesis system comprising:
the lens apparatus according to one of claims 1 to 5; and
the image synthesis apparatus having a wireless communication unit configured to wirelessly receive the optical information data from the communication unit of the lens apparatus.
